# EUROPÄISCHE PATENTSCHRIFT

(11) **EP 4 551 436 B1**
(45) Veröffentlichungstag und Bekanntmachung des Hinweises auf die Patenterteilung: **15.04.2026**
(21) Anmeldenummer: 23739467.1
(22) Anmeldetag: 21.06.2023
(51) Int. Cl.: B60R 21/013, B60R 21/015

(54) **VERFAHREN ZUM BETRIEB EINES INSASSENSCHUTZSYSTEMS FÜR EIN KRAFTFAHRZEUG**
METHOD FOR OPERATING AN OCCUPANT PROTECTION SYSTEM FOR A MOTOR VEHICLE
PROCÉDÉ DE FONCTIONNEMENT D'UN SYSTÈME DE PROTECTION DES OCCUPANTS D'UN VÉHICULE AUTOMOBILE

(30) Priorität: 08.07.2022 DE 102022207011
(43) Veröffentlichungstag der Anmeldung: 14.05.2025
(73) Patentinhaber: AUMOVIO Germany GmbH, 60488 Frankfurt am Main (DE)
(72) Erfinder: STEEGER, Boris, 63755 Alzenau (DE); SAUERMANN, Alexander, 63755 Alzenau (DE); FORSTER, Andreas, 30175 Hannover (DE); GEISSLER, Udo, 63755 Alzenau (DE)
(74) Vertreter: Aumovio Corporation
(86) Internationale Anmeldenummer: PCT/DE2023/200121
(87) Internationale Veröffentlichungsnummer: WO 2024/008244

(56) Entgegenhaltungen:
- DE-B3- 102009 012 407
- DE-B4- 102004 037 016

## Beschreibung

Die Erfindung betrifft ein Verfahren zum Betrieb eines Insassenschutzsystems für ein Kraftfahrzeug gemäß dem Oberbegriff des Anspruchs 1.

Insassenschutzsysteme bestehen üblicher Weise aus diversen Airbags, Gurtstraffern etc. und werden heutzutage gemäß gesetzlich vorgegebener Lastfälle ausgelegt und bewertet. Die Lastfälle bestimmen beispielsweise die Aufprallgeschwindigkeit, das Kollisionsobjekt, auf das der Aufprall erfolgt sowie die Position des Insassen im Fahrzeug. Dabei werden in der Regel die Sitzpositionen eines mittelgroßen Mannes und einer kleinen Frau berücksichtigt, welche diese zum Führen eines Kraftfahrzeuges wahrscheinlich einnehmen würden. Diese Positionen werden auch für Insassen auf dem Beifahrersitz angenommen.

In der Crashsimulation und Konzeption des Insassenschutzsystems und Fahrzeugs erfolgt die Bewertung durch Vergleich der in verschiedenen Körperregionen gemessenen Belastungswerte, wie bspw. Beschleunigungen, Kräfte, Lageveränderungen oder Eindrückungen usw. mit gesetzlichen Grenzwerten.

Die Bewertung der Insassenbelastung erfolgt im Wesentlichen nur an wenigen (1 bis <10) Muster- bzw. Versuchskonfigurationen.

Die Bewertung erfolgt anhand von Einzelbelastungswerten in den verschiedenen Körperregionen. Der Vergleich von verschiedenen Rückhaltesystemen wird mit wachsender Anzahl von Versuchskonfigurationen schwieriger, da immer ein Kompromiss für die Verletzungswahrscheinlichkeit in den einzelnen Körperregionen gefunden werden muss.

Für das Auslöseverhalten im Fahrtbetrieb eines Kraftfahrzeugs werden hingegen nur ein viel geringere Anzahl von Parametern erfasst und über fix vorab kalibrierte Auslösepfade ohne Berücksichtigung der Belastungswerte die Insassenschutzeinrichtungen ausgelöst.

Die DE 10 2004 037016 B4 beschreibt ein Verfahren zur Steuerung von Kraftfahrzeuginsassen-Schutzsystemen in einem Kraftfahrzeug bei einem Unfall.

Dabei wird von einem Hauptalgorithmus basierend auf Signalen von Aufprallsensoren des Kraftfahrzeugs, die eine Beschleunigung, einen Druck, einen Körperschall und/oder eine Deformation des Kraftfahrzeugs erfassen, ein gemeinsamer Unfallschwerefaktor berechnet, welcher die bei dem Unfall auftretende Verletzungsschwere eines Kraftfahrzeuginsassen charakterisiert, wobei der gemeinsame Unfallschwerefaktor durch einen gewichteten Mittelwert der Verhältnisse der Belastungen vorgegebener Körperpartien zu einer maximalen Belastung dieser Körperpartien berechnet wird. Zudem wird über einen separaten Zusatzalgorithmus ebenfalls basierend auf den Signalen der Aufprallsensoren eine zukünftig wahrscheinlichste Position des Kraftfahrzeuginsassen (voraus-)berechnet und es werden anhand dieser Position optimale Auslösezeitpunkte für die Kraftfahrzeuginsassen-Schutzsysteme ermittelt. Auf Grundlage einer Kombination des Hauptalgorithmus mit dem Zusatzalgorithmus werden letztlich anhand des berechneten Werts des gemeinsamen Unfallschwerefaktors sowie der ermittelten optimalen Auslösezeitpunkte die Kraftfahrzeuginsassen-Schutzsysteme gesteuert bzw. ausgelöst.

Die Aufgabe der Erfindung besteht darin, verschiedene Crash-Konfigurationen (bzw. Sitzpositionen des Insassen), wie sie beim autonomen Fahren bzw. von einem Fahrer gesteuerten Fahrzeug auch auf der Beifahrerseite auftreten können (z.B. Insassen in Liegeposition oder mit nach hinten verschobenen Sitz) in Bezug auf die zu erwartende Verletzungsschwere genauer zu bewerten und für jede Konfiguration das bestmögliche Schutzkonzept zu ermitteln und zu aktivieren und dabei den Rechenaufwand in der Steuereinheit dennoch vertretbar zu halten. Diese Aufgabe wird durch die Merkmale des Anspruchs 1 gelöst. Vorteilhafte Weiterbildungen sind den Unteransprüchen zu entnehmen.

So wird ein Verfahren zum Betrieb eines Insassenschutzsystems für ein Kraftfahrzeug beschrieben, bei welchem das Insassenschutzsystem zumindest eine Steuereinheit sowie diverse Insassenschutzeinrichtungen, wie eben Airbags, Gurtstraffer oder sonstige Aktoren bspw am Fahrzeugsitz zur Optimierung der Sitzposition bzw Position von Polsterflächen in Bezug auf den Insassen zu ermöglichen.

Zudem sind Sensoren zur Erkennung der Art und Schwere eines drohenden oder eintretenden Unfalls vorgesehen, also beispielweise Beschleunigungssensoren, Drehratensensoren oder auch Crashkontaktsensoren oder vorzugsweise auch vorausschauende Umfeldsensoren, wie Radar-, Lidar- oder Kamerasensoren, Ultraschallsensoren odgl zur Bewertung noch vor dem eigentlichen Zusammenstoß.

Zudem ist zumindest ein Insassenerfassungsmittel zum Erkennen einer Insassensituation vorgesehen, beispielsweise eine Innenraumkamera, wobei auch über Sitzmatten oder andere Sensortypen eben die Position des Insassen im Fahrzeug als auch die Stellung des Sitzes erfasst werden kann.

Die Steuereinheit führt in Abhängigkeit der Signale all dieser Sensoren die Auslösung des Insassenschutzsystems durch.

Während jedoch bisher die Sensorsignale in einige wenige Auslösepfade eingespeist wurden, die zwar vorab durchaus anhand von Belastungswerten optimiert und kalibriert wurden, die Belastungswerte aber bei der eigentlichen Auslösung nicht mehr berücksichtigt werden, ist im vorliegenden Verfahren der Ansatz ein anderer.

So wird durch Crashversuche oder vorzugsweise eher durch Simulationen für eine vorgegebene Anzahl unterschiedlicher Muster-Insassensituationen als erste Dimension und eine vorgegebene Anzahl von Muster-Unfallsituationen als zweite Dimension jeweils zumindest eine Anzahl von Auslösekonfigurationen des Insassenschutzsystems als dritte Dimension vorgegeben und der Einfluss zumindest der in Frage kommenden Auslösekonfigurationen auf die Gefahrensituation bewertet. Durch die Anzahl an Muster-Insassensituationen mal Anzahl der Muster-Unfallsituationen mal Anzahl der zu berücksichtigenden Auslösekonfigurationen erhöht sich natürlich der Speicherbedarf, aber natürlich eben auch die Qualität der Daten und letztendlich Auslöseentscheidung.

Darüber hinaus wird jedoch noch eine weitere entscheidende Verfeinerung vorgenommen, indem für eine Mehrzahl von Körperteilen des Insassen jeweils je Körperteil zumindest ein Belastungswert ermittelt und gegenüber einem Vorgabewert normiert wird.

So können je Körperteil auch eine Mehrzahl von unterschiedlichen Belastungswerten bewertet werden, beispielsweise einwirkende Kräfte oder Beschleunigungen als auch daraus resultierende Verlagerungen, Verformungen usw.. Durch die Normierung gegenüber einem Vorgabewert entsteht eine relative Größe, welche normiert so über physikalisch an sich verschiedene Parameter hinweg deutlich einfacher bewertet werden kann.

Aus den normierten Belastungswerten oder daraus abgeleiteten Größe für die Mehrzahl von Körperteilen wird nun aber zudem noch einerseits ein Maximalwert und zudem andererseits ein Mittelwert gebildet.

Der Maximalwert bildet dabei den höchsten Wert eines normierten Belastungswerts als Maß der lokalen Belastung eines Körperteils ab, während durch die Mittelwertbildung zudem eine weitere, eigenständige Entscheidungsgröße über die Gesamtbelastung ermittelt wird.

Diese gesamten Daten sich in geeigneter Form, beispielsweise Tabellen im Speicher hinterlegt. Der Aufwand der Simulation und Bewertung ist durchaus erheblich, erfolgt aber eben nur in der vorausgehenden Simulation und muss gerade nicht laufend im Fahrtbetrieb durchgeführt werden. Dennoch erlaubt diese verfeinerte Bewertung aber eine deutlich verbesserte Auslöseentscheidung.

Dazu wird Im laufenden Fahrtbetrieb des Kraftfahrzeugs bei Erkennen einer drohenden oder eintretenden Unfallsituation einerseits die aktuelle Unfallsituation mit der vorgegebenen Anzahl von Muster-Unfallsituationen verglichen und wird zumindest eine am besten übereinstimmende Muster-Unfallsituation bestimmt. Dies kann unmittelbar genau eine der vorgegebenen Muster-Unfallsituationen sein oder beispielsweise durch Interpolation aus einer Mehrzahl von Muster-Unfallsituationen eine Bewertung erfolgen.

Andererseits wird die aktuelle Insassensituationen mit der vorgegebenen Anzahl von Muster-Insassensituationen verglichen und zumindest eine am besten übereinstimmende Muster-Insassensituationen bestimmt. Auch hier kann dies unmittelbar eine der vorgegebenen Muster-Unfallsituationen sein oder durch Interpolation aus einer Mehrzahl von Muster-Unfallsituationen erfolgen.

Es muss dann der Algorithmus nur noch jene Auslösekonfiguration aus der Anzahl von Auslösekonfigurationen des Insassenschutzsystems auswählen, für welche zunächst der Maximalwert am geringsten ist und bei einer Mehrzahl verbleibender Auslösekonfigurationen zudem der Mittelwert am geringsten ist.

Die am besten übereinstimmende Muster-Unfallsituation für die aktuelle Unfallsituation kann dabei in einem Ausführungsbeispiel aus der vorgegebenen Anzahl von Muster-Unfallsituationen bestimmt werden, indem die relative Abweichung der von den Sensoren zur Erkennung der Art und Schwere eines drohenden oder eintretenden Unfalls aktuell erfassten Parameter zu jeweils einem der Muster-Unfallsituation zugeordneten Vorgabewert ermittelt und jene Muster-Unfallsituation mit der über alle Parameter in Summe kleinsten Abweichung ermittelt wird.

Analog dazu kann in einer bevorzugten Ausgestaltung die am besten übereinstimmende Muster- Insassensituation(en) für die aktuelle Insassensituation aus der vorgegebenen Anzahl von Insassensituationen bestimmt werden, indem die relative Abweichung aktuell erfasster Parameter der von dem zumindest einem Insassenerfassungsmittel zu jeweils einem der Muster-Insassensituation zugeordneten Vorgabewert ermittelt und jene Muster-Insassensituation mit der über alle Parameter in Summe kleinsten Abweichung ermittelt wird.

**In** einer Weiterbildung ist aber zudem denkbar, dass zumindest einigen oder jedem Parameter ein Gewichtsfaktor zugeordnet wird, wobei für zumindest einen Parameter ein von den anderen abweichender Gewichtsfaktor vorgesehen ist und die Summe der so gewichteten relativen Abweichung ermittelt wird. Dabei wird die ungleiche Relevanz der einzelnen Parameter für die Auslösung stärker berücksichtigt und kann insbesondere auch vorgesehen sein, dass einige Parameter auf das Gewicht "Null" gesetzt werden, also de facto für die spezielle Konstellation nicht berücksichtigt werden.

Eine weitere Ausgestaltung geht diesen Weg noch weiter. Es sind für zumindest eine einzelne Insassenschutzeinrichtungen oder eine Untergruppe aus der Anzahl von Auslösekonfigurationen des Insassenschutzsystems jeweils nur eine Untergruppe der Anzahl von Parameter zu berücksichtigen. Das ist vorzugsweise natürlich zumindest der am stärksten für die Auslöseentscheidung relevante Parameter, der dann eben für diese spezielle Insassenschutzeinrichtung oder Untergruppe aus der Anzahl von Auslösekonfigurationen des Insassenschutzsystems berücksichtigt wird. Es müssen also gerade nicht für alle Insassenschutzeinrichtungen alle Parameter berücksichtigt werden, sondern können gezielt Untergruppen aus der Anzahl von Auslösekonfigurationen des Insassenschutzsystems gebildet werden, für welche mit einer deutlich geringeren Anzahl an Parametern bzgl. der Insassensituation und/oder Unfallsituation die Bewertung erfolgt. Immer jedoch ist jene Auslösekonfiguration aus der Anzahl von Auslösekonfigurationen des Insassenschutzsystems auszuwählen, welche die zweidimensionale Bewertung sowohl hinsichtlich des Maximalwerts als auch Mittelwerts erfüllt.

Es wird also für die aktuelle Insassensituation die am besten übereinstimmende Muster- Insassensituationen und/oder für die aktuelle Unfallsituation die am besten übereinstimmende Muster-Unfallsituation nur anhand dieser Untergruppe der Anzahl von Parameter, zumindest der am stärksten für die Auslöseentscheidung relevante Parameter bestimmt.

**In** einer weiteren Ausgestaltung ist zudem vorgesehen, dass für die Mehrzahl von Körperteilen für die normierten Belastungswerte oder daraus abgeleiteten Größen jeweils ein Gewichtsfaktor zugeordnet wird, wobei für zumindest einen Belastungswert ein von den anderen abweichender Gewichtsfaktor vorgesehen ist und so ein gewichteter Mittelwert bestimmt wird. In die Mittelwertbildung gehen also nicht zwangsweise alle Parameter gleich schwer ein, sondern kann auch hier eine Relevanz für die Auslösung berücksichtigt werden.

Eine weitere Ausgestaltung sieht vor, dass für die Mehrzahl von Körperteilen die normierten Belastungswerte in eine vorgegebene Anzahl von Gefahrenstufen eingeteilt werden und als Maximalwert der maximale Wert der Gefahrenstufen der Körperteile verwendet wird, welcher bei der Auslösekonfiguration und der Muster-Insassensituationen und der Muster-Unfallsituationen ermittelt wurde. Diese Gefahrenstufen kann man sich gut bspw über ein Farbschema veranschaulichen, wo eben insassenunkritische Werte bspw als grün, kritischere über gelb zu orange und ganz gefährliche oder gar tödliche Werte mit rot odgl veranschaulicht werden können, wobei in der Umsetzung in einem Algorithmus dies auch durch einfache Stufenwerte, bspw von 1 bis 5 umgesetzt werden.

Dabei werden dann vorzugsweise die Maximalwerte innerhalb einer Gefahrenstufe eben nicht weiter unterschieden, sondern greifen dann etwas stärker die Mittelwerte in die Auslöseentscheidung ein.

Eine weitere bevorzugte Ausgestaltung ergibt sich, wenn für aktuelle Unfallsituation anstelle der einen am besten übereinstimmenden Muster-Unfallsituation eine Mehrzahl nächstkommender Muster-Unfallsituationen und/oder für aktuelle Insassensituation anstelle der einen am besten übereinstimmenden Muster-Insassensituation eine Mehrzahl nächstkommender Muster-Insassensituationen bestimmt werden und dann dabei für die aktuelle Unfallsituation und/oder aktuelle Insassensituation für zumindest einzelne Insassenschutzeinrichtungen zumindest für die Untergruppe der für deren Auslösung am stärksten relevanten Parameter diese Parameter aus der Interpolation der Werte der Mehrzahl nächstkommender Muster-Unfallsituationen und/oder Mehrzahl nächstkommender Muster-Insassensituationen bestimmt werden. Eine solche Interpolation kann die Auslöseentscheidung noch präziser werden lassen oder erlauben, mit deutlich weniger vorgegebenen und damit ja auch abzuspeichernden Muster-Unfallsituationen oder Muster-Insassensituationen auszukommen. Der Aufwand der Interpolation bleibt dabei auch dann überschaubar, wenn man sich eben auf einige wenige Parameter beschränkt und das wiederum kann insbesondere dann gut vertreten werden, wenn eben für zumindest einzelne Insassenschutzeinrichtungen eine begrenzte Betrachtung erfolgt und für diese eben auch nur eine so überschaubare Anzahl von Parametern berücksichtigt und eben nur der oder die wichtigsten auch noch interpoliert werden. Für unterschiedliche Insassenschutzeinrichtungen werden damit dann also immer nur Untergruppen der Parameter berücksichtigt, immer jedoch neben dem Maximalwert bzw daraus abgeleitete Gefahrenstufe und eben noch dazu der Mittelwert.

Die Erfindung wird in eine Steuereinheit für ein Insassenschutzsystem für ein Kraftfahrzeug implementiert, welches zumindest eine Eingangs-Schnittstelle zum Anschließen von Sensoren zur Erkennung der Art und Schwere eines drohenden oder eintretenden Unfalls sowie zumindest einem Insassenerfassungsmittel sowie zumindest eine Ausgangs-Schnittstelle zum Anschließen von Insassenschutzeinrichtungen aufweist. Erfindungsgemäß ist ein Algorithmus zur Durchführung des Verfahrens mit entsprechenden normierten Belastungswerten für die Körperteile bei den jeweils vorgegebenen Muster-Insassensituationen und der Muster-Unfallsituationen bei den dafür jeweils vorgesehenen Auslösekonfigurationen hinterlegt.

Die Erfindung wird nachfolgend noch anhand von Figuren und Ausführungsbeispielen näher beschrieben.

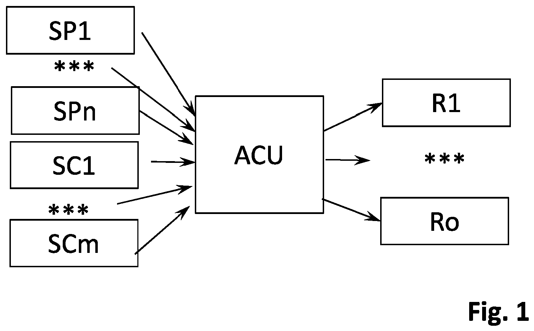

Figur 1 skizziert zunächst den hardware-seitigen Grundaufbau eines Insassenschutzsystem für ein Kraftfahrzeug. Kernpunkt und maßgebliche, selbstständig handelbare Einheit ist dabei eine Steuereinheit ACU, welches die hier als Pfeile dargestellten Verbindungen zu den Eingangs-Schnittstellen zum Anschließen von Sensoren zur Erkennung der Art und Schwere eines drohenden oder eintretenden Unfalls, hier als SC1... SCm bezeichnet, sowie die als Pfeile dargestellten Verbindungen zu den Eingangs-Schnittstellen zum Anschließen von Insassenerfassungsmitteln SP1 bis SPn zeigt. Ebenfalls als Pfeile dargestellt sind die Verbindungen zu der Ausgangs-Schnittstellen zum Anschließen von Insassenschutzeinrichtungen R1... Ro. Die Steuereinheit beziehungsweise das Insassenschutzsystem unterscheiden sich dabei von einem herkömmlichen System nur durch den im Speicher hinterlegten Algorithmus, insbesondere eben den hinterlegten Muster-Insassensituationen und Muster-Unfallsituationen sowie den dafür ermittelten normierten Belastungswerten für die Körperteile für die jeweiligen Parameter bei den in Betracht gezogenen Auslösekonfigurationen.

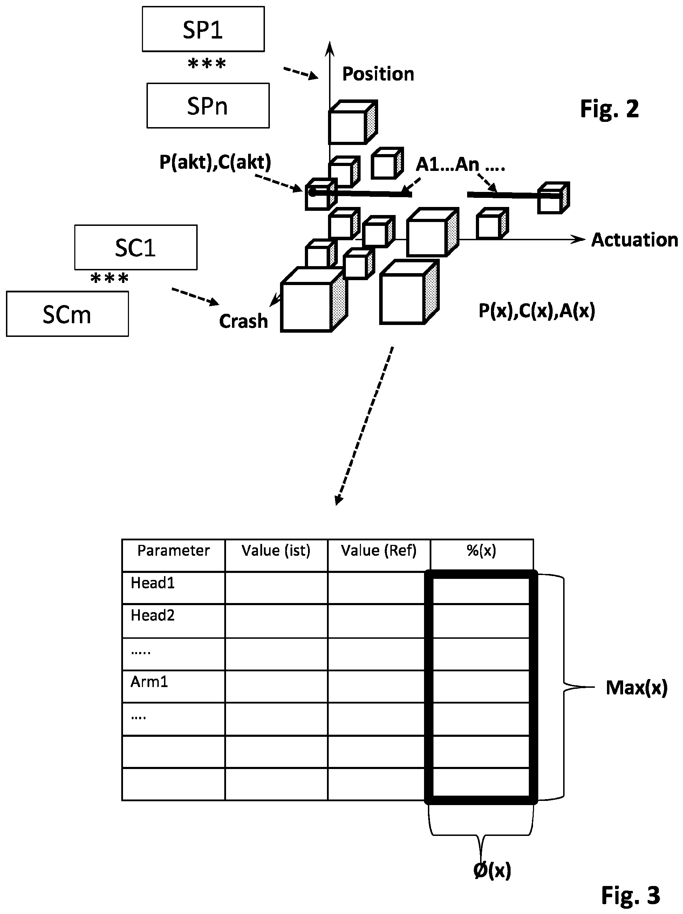

Die Figur 2 skizziert nun diese drei Dimensionen der Entscheidung, nämlich die Insassensituation als "Position"-Achse, die Unfallsituation als "Crash"-Achse, wobei dort natürlich auch die drohenden Unfallsituationen auf Basis der Umfelderkennung, also quasi "Precrash" mit umfasst sind und die dritte Dimension die verschiedenen Auslösekonfigurationen.

In die Insassensituation als "Position"-Achse gehen dabei die Signale der Sensoren SP1 bis SPn für die Erkennung der Insassensituation ein.

In die Unfallsituation als "Crash"-Achse gegen die direkten Unfallsensoren, wie Beschleunigungs- und Drehratensensoren als auch die Signale der Umfelderkennung, wie beispielsweise Kamera-, Radar- oder Lidar- und auch Ultraschallsensoren ein.

Daraus ergibt sich zunächst eine aktuelle Insassensituation und Unfallsituation, hier einmal als Punkt P(akt),C(akt) dargestellt, zu den sich als dritte Dimension nun die diversen Auslösekonfigurationen ergeben. Wie durch die dicke Linie A1..An dargestellt werden soll, sind dabei einige Auslösekonfigurationen denkbar, andere jedoch nicht und entsprechend die Linie auch unterbrochen.

Die Kästchen sollen nun dabei verdeutlichen, dass jeweils nur bestimmte, ausgewählte Muster-Insassensituationen und Muster-Unfallsituationen hinterlegt sind und deren Größe eben variieren kann, also unterschiedlich große Bereiche der Insassensituation und Unfallsituation direkt abdecken können und eben auch nicht der Raum komplett gefüllt sein muss, sondern zwischen den einzelnen Kästchen Abstände, also Freiräume verbleiben, für welche zwar kein Muster unmittelbar dieses überdeckt, aber dann über die beschriebenen Regeln das am besten übereinstimmende gewählt oder sogar eine Interpolation aus den benachbarten Mustern ermittelt wird.

Dabei sei nochmals klargestellt, dass zur Minimierung des Speicherbedarfs und Algorithmusaufwands keinesfalls für alle Insassenschutzeinrichtungen alle theoretisch denkbaren Auslösekonfigurationen hinterlegt sein müssen geschweige denn dafür auch wieder alle Parameter bzw. normierten Belastungswerte, sondern für einzelne Insassenschutzeinrichtungen bzw. bestimmte Untergruppen derer jeweils nur die dafür auslöserelevantesten Parameter hinterlegt sein müssen und für andere Insassenschutzeinrichtungen eben andere bzw. dies genauso eben aus dem Blickwinkel der aktuellen Unfall- und Insassenschutzsituationen eben nur eine deutlich kleinere Menge an Auslösekonfigurationen und Parametern überhaupt zur Verfügung stehen bzw. in Betracht kommen.

Ein jedes solches Kästchen steht aber gedanklich für eine Auslösekonfiguration bei einer hinterlegten Muster-Insassensituation und Muster-Unfallsituation sowie den dafür hinterlegten normierten Belastungswerten als Parameter.

Dies soll in Figur 3 anhand der Tabelle verdeutlicht werden, wobei quasi jedem Kästchen aus Figur 2 zumindest ein solches Tabellenblatt entspricht.

Dort hinterlegt sind für die jeweils relevantesten Parameter, hier abstrakt als Head1,Head 2..., Arm1, Arm2 usw bezeichnet, die für diese Auslösekonfiguration bei der definierten und hinterlegten Muster-Insassensituation und Muster-Unfallsituation durch Tests oder Simulation ermittelten Belastungswerte Value(Ist), welche jedoch gegenüber Referenzwerten der Belastung Value(Ref) zu einem normierten Belastungswert % normiert sind.

Das heißt also, es wird vorzugsweise eine prozentuale Belastung ermittelt, durch welche physikalisch an sich absolut unterschiedliche Größen, wie Deformationen, Körperverlagerungen oder Maße usw. zu einem vergleichbaren Maßstab überführt werden, nämlich der jeweiligen prozentualen Gefährdung des Insassen.

Aus diesen unterschiedlichen normierten Belastungswerten % oder aus diesen abgeleiteten Werten werden nun aber wiederum zwei entscheidungserhebliche Werte abgeleitet, nämlich einerseits der Wert Max(x) als der maximale Wert der normierten Belastungswerte als eben auch zusätzlich der Mittelwert Ø(x).

Es wird also dann jene Auslösekonfiguration aus der Anzahl von Auslösekonfigurationen des Insassenschutzsystems ausgewählt, für welche zunächst der Maximalwert am geringsten ist und bei einer Mehrzahl verbleibender Auslösekonfigurationen zudem der Mittelwert am geringsten ist.

Die Visualisierung in den Figuren 2 und 3 ist dabei rein skizzenhaft und sind je Kästchen vorzugsweise getrennt nach Insassenschutzeinrichtungsuntergruppen mehrere kleinere Tabellenblätter mit den jeweils dafür nur erforderlichen Parametern hinterlegt. Da eben unterschiedliche Insassenschutzeinrichtungs-Untergruppen für manche Kombinationen aus Insassensituation und Unfallsituation gar nicht in Betracht kommen oder jeweils ganz andere Wertebereiche abdecken können, also im Sinnbild der Kästchen unterschiedlich groß sind, werden eben mehrere solche Kästchen vorgesehen, um einfacher und mit geringerem Speicheraufwand die erforderlichen Werte zu unterlegen.

Die Insassenbelastungen, die in den einzelnen Körperregionen des Insassen (Dummies) gemessen werden, werden also zu einem gewichteten Insassenbelastungsindex zusammengefasst, der angibt, zu wieviel Prozent der Grenzwerte für die einzelnen Körperregionen der Insasse im Mittel belastet ist. Einzelbelastungswerte für einzelne Körperregionen, die dabei nah am oder sogar über dem gesetzlichen Grenzwert liegen, werden dabei vorzugsweise separat in einer Gefahrenstufe, bspw. visualisierbar als Farbskala (grün, gelb , rot) berücksichtigt. Dies erlaubt, dass die Insassenbelastung für eine Vielzahl von Lastfällen anhand eines einzigen Zahlenwerts (Insassenbelastungsindex) und des zugehörigen Gefahrenstufe, also des Farbcodes im Hinblick auf die zu erwartenden Verletzungsschwere bewertet werden können.

**In** Bezug auf ein autonom fahrendes Fahrzeug, bei dem zahlreiche Sitzpositionen möglich sind, kann die zu erwartende Verletzungsschwere für eine bestimmte Sitzposition, die in Simulationen bzw. Versuchen ermittelt werden kann, dann in Form einer Matrix aufgetragen werden, die das Verletzungsrisiko des Insassen in verschiedenen Sitzpositionen (mit verschiedenen Rückhaltesystemkonfigurationen) zeigt.

Eine Interpolation zwischen den einzelnen Stützpunkten mit geeigneten Funktionen gibt dann einen Hinweis auf das zu erwartende Verletzungsrisiko zwischen den Stützpunkten.

Verschiedene Crashkonfigurationen (Aufprallgeschwindigkeit, Insassenposition, Insassengröße, Rückhaltesystemkonfiguration (Airbags, Gurte,...), etc.) können anhand eines Belastungswertes bewertet und einfach miteinander verglichen werden und zwar eben sowohl hinsichtlich der punktuellen maximalen Gefährdung anhand des Maximalwerts bzw abgeleiteten Gefahrenstufe als auch zusätzlich als weiteres Kriterium der mittleren durchschnittlichen Belastung.

Dies bietet Vorteile bei allen Anwendungen, bei denen eine Vielzahl von Konfigurationen betrachtet werden muss, z.B. beim autonomen Fahren

Im Prinzip für alle Fälle bei denen in einer Vielzahl von möglichen Konfigurationen mit einer Vielzahl von Bewertungskriterium eine Bewertung bzw. Optimierung erfolgen soll.

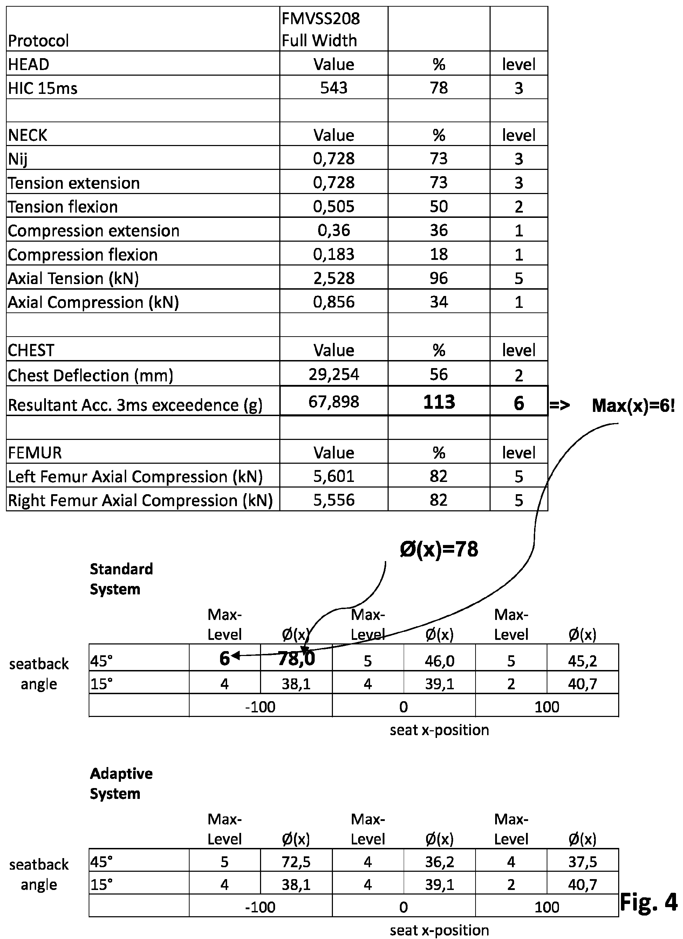

Die Figur 4 skizziert nun noch eine Matrix der Belastungswerte ermittelt aus einer Simulation eines Fahrzeugs für eine bestimmte Insassen- und Unfallsituation und natürlich einer definierten Auslösestrategie. Es sind dabei 6 Level von 1 für absolut unkritisch bis Level 6 bei deutlicher Überschreitung der Grenzwerte und damit Gefahr lebensgefährlicher Verletzungen vorgesehen.

Gut zu erkennen dabei der an sich einem Level 4 zuordenbare moderate Mittelwert (Ø(x)) über alle Belastungswerte, welcher aber eben aufgrund des einen, unvertretbar hohen Brustbelastungswerts (Resultant Acc. 3ms exceedence (g)) im Level 6 insgesamt zu der Level 6 Bewertung der Gesamtsituation führt.

Diese Gesamtbewertung kann nun in eine Entscheidungsmatrix überführt werden, die neben einer Standardauslösung auch alternative Auslösestrategien oder Adaptionen der Parameter zeigt, wie bspw. den Einfluss eines geänderten Winkels der Rückenlehne.

Wenn auch hier nur exemplarisch, sei doch für eine adaptives System der Gefahrenlevel 5 erreichbar und somit diese Auslösevariante zu wählen.

## Patentansprüche

1. Verfahren zum Betrieb eines Insassenschutzsystems für ein Kraftfahrzeug,
mit einer Steuereinheit (ACU) sowie Insassenschutzeinrichtungen (R1... Ro) sowie Sensoren (SC1... SCm) zur Erkennung der Art und Schwere eines drohenden oder eintretenden Unfalls, mit zumindest einem Insassenerfassungsmittel (SP1... SPn) zum Erkennen einer Insassensituation, - wobei die Steuereinheit (ACU) in Abhängigkeit dieser Signale die Auslösung des Insassenschutzsystems durchführt, **dadurch gekennzeichnet, dass**
- für eine vorgegebene Anzahl unterschiedlicher Muster-Insassensituationen und eine vorgegebene Anzahl von Muster-Unfallsituationen jeweils zumindest eine Anzahl von Auslösekonfigurationen des Insassenschutzsystems vorgegeben und der Einfluss zumindest der in Frage kommenden Auslösekonfigurationen auf die Gefahrensituation bewertet wird,
- indem für eine Mehrzahl von Körperteilen des Insassen jeweils je Körperteil zumindest ein Belastungswert (Value(Ist)) ermittelt und gegenüber einem Vorgabewert (Value(Ref)) normiert wird,
- wobei aus den normierten Belastungswerten (%) oder einer daraus abgeleiteten Größe für die Mehrzahl von Körperteilen
- einerseits ein Maximalwert (Max(x)) gebildet wird, welcher den höchsten Wert eines normierten Belastungswerts als Maß einer lokalen Belastung eines Körperteils abbildet, und
- zudem andererseits ein Mittelwert (Ø(x)) gebildet wird, welcher eine weitere, eigenständige Entscheidungsgröße über eine Gesamtbelastung bildet,
und im laufenden Fahrtbetrieb des Kraftfahrzeugs bei Erkennen einer drohenden oder eintretenden Unfallsituation
- einerseits die aktuelle Unfallsituation (C(akt)) mit der vorgegebenen Anzahl von Muster-Unfallsituationen (P(x)) verglichen wird und zumindest eine am besten übereinstimmte Muster-Unfallsituation bestimmt wird,
- andererseits die aktuelle Insassensituationen (P(akt)) mit der vorgegebenen Anzahl von Muster-Insassensituationen (P(x)) verglichen wird und zumindest eine am besten übereinstimmte Muster-Insassensituationen bestimmt wird,
- und dann jene Auslösekonfiguration (A(x)) aus der Anzahl von Auslösekonfigurationen des Insassenschutzsystems ausgewählt wird,
für welche zunächst der Maximalwert (Max(x)) am geringsten ist und bei einer Mehrzahl verbleibender Auslösekonfigurationen zudem der Mittelwert (Ø(x)) am geringsten ist.

2. Verfahren nach Anspruch 1, **dadurch gekennzeichnet, dass**
die am besten übereinstimmende Muster-Unfallsituation für die aktuelle Unfallsituation aus der vorgegebenen Anzahl von Muster-Unfallsituationen bestimmt wird,
indem die relative Abweichung der von den Sensoren zur Erkennung der Art und Schwere eines drohenden oder eintretenden Unfalls aktuell erfassten Parameter zu jeweils einem der Muster-Unfallsituation zugeordneten Vorgabewert ermittelt und jene Muster-Unfallsituation mit der über alle Parameter in Summe kleinsten Abweichung ermittelt wird.

3. Verfahren nach Anspruch 1, **dadurch gekennzeichnet, dass**
die am besten übereinstimmende Muster- Insassensituationen für die aktuelle Insassensituationen aus der vorgegebenen Anzahl von Insassensituationen bestimmt wird,
indem die relative Abweichung aktuell erfasster Parameter der von dem zumindest einem Insassenerfassungsmittel zu jeweils einem der Muster-Insassensituation zugeordneten Vorgabewert ermittelt und jene Muster-Insassensituation mit der über alle Parameter in Summe kleinsten Abweichung ermittelt wird.

4. Verfahren nach Anspruch 2 oder 3, **dadurch gekennzeichnet, dass** wobei jedem Parameter ein Gewichtsfaktor zugeordnet wird, wobei für zumindest einen Parameter ein von den anderen abweichender Gewichtsfaktor vorgesehen ist und die Summe der so gewichteten relativen Abweichung ermittelt wird.

5. Verfahren nach Anspruch 2 oder 3, **dadurch gekennzeichnet, dass** für zumindest eine einzelne Insassenschutzeinrichtungen oder eine Untergruppe aus der Anzahl von Auslösekonfigurationen des Insassenschutzsystems jeweils nur eine Untergruppe der Anzahl von Parameter, zumindest der am stärksten für die Auslöseentscheidung relevante Parameter berücksichtigt wird und
für die aktuelle Insassensituationen die am besten übereinstimmende Muster-Insassensituationen und/oder
für die aktuelle Unfallsituation die am besten übereinstimmende Muster-Unfallsituation nur anhand dieser Untergruppe der Anzahl von Parameter, zumindest der am stärksten für die Auslöseentscheidung relevante Parameter bestimmt wird.

6. Verfahren nach Anspruch 5, **dadurch gekennzeichnet, dass** für die Mehrzahl von Körperteilen für die normierten Belastungswerte oder daraus abgeleiteten Größen jeweils ein Gewichtsfaktor zugeordnet wird, wobei für zumindest einen Belastungswert ein von den anderen abweichender Gewichtsfaktor vorgesehen ist und so ein gewichteter Mittelwert bestimmt wird.

7. Verfahren nach Anspruch 1, **dadurch gekennzeichnet, dass** für die Mehrzahl von Körperteilen die normierten Belastungswerte in eine vorgegebene Anzahl von Gefahrenstufen eingeteilt werden und als Maximalwert der maximale Wert der Gefahrenstufen der Körperteile verwendet wird, welcher bei der Auslösekonfiguration und der Muster-Insassensituationen und der Muster-Unfallsituationen ermittelt wurde.

8. Verfahren nach einem der vorangehenden Ansprüche, **dadurch gekennzeichnet, dass**
für aktuelle Unfallsituation anstelle der einen am besten übereinstimmenden Muster-Unfallsituation eine Mehrzahl nächstkommender Muster-Unfallsituationen und/oder
für aktuelle Insassensituation anstelle der einen am besten übereinstimmenden Muster-Insassensituation eine Mehrzahl nächstkommender Muster-Insassensituationen bestimmt werden
und für die aktuelle Unfallsituation und/oder aktuelle Insassensituation für zumindest einzelne Insassenschutzeinrichtungen zumindest für die Untergruppe der für deren Auslösung am stärksten relevanten Parameter diese Parameter aus der Interpolation der Werte der Mehrzahl nächstkommender Muster-Unfallsituationen und/oder Mehrzahl nächstkommender Muster-Insassensituationen bestimmt werden.

9. Steuereinheit (ACU) für ein Insassenschutzsystem für ein Kraftfahrzeug mit
- zumindest einer Eingangs-Schnittstelle zum Anschließen von Sensoren (SC1... SCm) zur Erkennung der Art und Schwere eines drohenden oder eintretenden Unfalls sowie zumindest einem Insassenerfassungsmittel (SP1... SPn) sowie
- zumindest einer Ausgangs-Schnittstelle zum Anschließen von Insassenschutzeinrichtungen (R1... Ro), **dadurch gekennzeichnet, dass** ein Algorithmus zur Durchführung des Verfahrens nach einem der vorangehenden Ansprüche mit entsprechenden normierten Belastungswerten für die Körperteile bei den jeweils vorgegebenen Muster-Insassensituationen und der Muster-Unfallsituationen bei den dafür jeweils vorgesehenen Auslösekonfigurationen hinterlegt ist.

## Claims

1. A method for operating an occupant protection system for a motor vehicle, having a control unit (ACU) and occupant protection devices (R1... Ro) as well as sensors (SC1... SCm) for identifying the type and severity of an imminent or occurring accident, using at least one occupant sensing means (SP1... SPn) for detecting an occupant situation, - wherein the control unit (ACU) triggers the occupant protection system on the basis of these signals,
**characterised in that**
- at least a number of triggering configurations of the occupant protection system are respectively specified for a specified number of different model occupant situations and a specified number of model accident situations, and the influence of at least the possible trigger configurations on the hazard situation is assessed,
- by determining, for a plurality of body parts of the occupant, at least one stress value (Value(Ist)) for each body part and normalising it with respect to a default value (Value(Ref)),
- wherein, from the normalised load values (%) or a variable derived therefrom for the plurality of body parts
- on one hand, a maximum value (Max(x)) is formed, which represents the highest value of a standardised loading value as a measure of a local load on a body part, and
- in addition, on the other hand, a mean value (Ø(x)) is formed, which forms a further, independent decision variable relating to an overall load, and during ongoing driving operation of the motor vehicle, upon an imminent or occurring accident situation being detected
- on one hand, the current accident situation (C(akt)) is compared with the specified number of model accident situations (P(x)) and at least one best matched model accident situation is determined,
- on the other hand, the present occupant situation (P(akt)) is compared with the prescribed number of model occupant situations (P(x)) and at least one model occupant situation which matches best is determined,
- and then that trigger configuration (A(x)) for which the maximum value (Max(x)) is initially the lowest and, in the case of a plurality of remaining deployment configurations, the average value (Ø(x)) is also the lowest, is selected from the number of deployment configurations of the occupant protection system.

2. The method as claimed in claim 1, **characterised in that**
the model accident situation with the best match for the current accident situation is determined from the specified number of model accident situations,
by determining the relative deviation of the parameters currently sensed by the sensors for detecting the type and severity of an imminent or occurring accident with respect to a respective default value assigned to the model accident situation, and determining the model accident situation with the smallest deviation in sum total across all parameters.

3. The method as claimed in claim 1, **characterised in that**
the model occupant situations that best match the current occupant situations is determined from the specified number of occupant situations,
by determining the relative deviation of currently detected parameters of the default value assigned by the at least one occupant sensing means to a respective one of the model occupant situations, and determining the model occupant situation with the smallest deviation over all parameters.

4. The method as claimed in claim 2 or 3, **characterised in that,** wherein a weight factor is assigned to each parameter, wherein a weight factor which differs from the others is provided for at least one parameter, and the sum of the relative deviation thus weighted is determined.

5. The method as claimed in claim 2 or 3, **characterised in that,** for at least one individual occupant protection device or a subgroup of the number of deployment configurations of the occupant protection system, in each case only a subgroup of the number of parameters, at least of the parameters most relevant to the triggering decision, is taken into account, and
for the current occupant situations, the model occupant situations that best correspond and/or
for the current accident situation, the model accident situation best matching is determined only on the basis of this subgroup of the number of parameters, at least that parameter which is most relevant to the triggering decision.

6. The method as claimed in claim 5, **characterised in that,** for the plurality of body parts, a respective weight factor is assigned for the standardised loading values or variables derived therefrom, wherein a weight factor that deviates from the others is provided for at least one loading value, and thus a weighted mean value is determined.

7. The method as claimed in claim 1, **characterised in that,** for the plurality of body parts, the normalised exposure values are divided into a specified number of danger levels and the maximum value of the danger levels of the body parts that was determined during the triggering configuration and the model occupant situations and the model accident situations is used as the maximum value.

8. The method as claimed in any of the preceding claims, **characterised in that** for the current accident situation, instead of the one model accident situation which matches best, a plurality of closely matching model accident situations, and/or for the current occupant situation, instead of the one model occupant situation that matches best, a plurality of closely matching model occupant situations are determined
and for the current accident situation and/or current occupant situation for at least individual occupant protection devices, at least for the subgroup of parameters most relevant for the triggering thereof, these parameters are determined from the interpolation of the values of the plurality of closest model accident situations and/or the plurality of closest model occupant situations.

9. A control unit (ACU) for an occupant protection system for a motor vehicle having
- at least one input interface for connecting sensors (SC1... SCm) for identifying the type and severity of an imminent or occurring accident, and at least one occupant sensing means (SP1... SPn) and
- at least one output interface for connecting occupant protection devices (R1... Ro), **characterised in that**
an algorithm for carrying out the method as claimed in one of the preceding claims is stored with corresponding normalised loading values for the body parts in the respectively specified model occupant situations and the model accident situations in the respectively provided trigger configurations for them.

## Revendications

1. Procédé de fonctionnement d'un système de protection des occupants d'un véhicule automobile, comprenant une unité de commande (ACU), des dispositifs de protection des occupants (R1...Ro) ainsi que des capteurs (SC1...SCm) pour détecter la nature et la gravité d'un accident imminent ou en cours, et au moins un moyen de détection des occupants (SP1...SPn) pour reconnaître une situation des occupants, dans lequel l'unité de commande (ACU) effectue le déclenchement du système de protection des occupants en fonction de ces signaux,
**caractérisé en ce que**
- pour un nombre prédéfini de différentes situations-types d'occupants et un nombre prédéfini de situations-types d'accidents, au moins un certain nombre de configurations de déclenchement du système de protection des occupants est respectivement prédéfini, et l'influence au moins des configurations de déclenchement pertinentes sur la situation de danger est évaluée,
- au moins une valeur de charge (Value(Ist)) étant déterminée pour chaque partie du corps et normalisée par rapport à une valeur de référence (Value(Ref)) pour une pluralité de parties du corps de l'occupant,
- dans lequel, à partir des valeurs de charge normalisées (%) ou d'une grandeur dérivée de celles-ci pour la pluralité de parties du corps
- d'une part, une valeur maximale (Max(x)) est déterminée, représentant la valeur la plus élevée d'une valeur de charge normalisée comme mesure d'une charge locale sur une partie du corps, et
- d'autre part, une valeur moyenne (Ø(x)) est déterminée, constituant une autre grandeur de décision indépendante relative à la charge totale, et pendant le fonctionnement normal du véhicule automobile, lors de la détection d'une situation d'accident imminente ou en cours
- d'une part, la situation actuelle d'accident (C(akt)) est comparée avec le nombre prédéfini de situations-types d'accidents (P(x)) et au moins une situation-type d'accident correspondant le mieux est déterminée,
- d'autre part, la situation actuelle des occupants (P(akt)) est comparée avec le nombre prédéfini de situations-types d'occupants (P(x)) et au moins une situation-type d'occupants correspondant le mieux est déterminée,
- et ensuite, la configuration de déclenchement (A(x)) est sélectionnée parmi le nombre de configurations de déclenchement du système de protection des occupants, pour laquelle la valeur maximale (Max(x)) est d'abord la plus faible, et, en cas de pluralité de configurations de déclenchement restantes, la valeur moyenne (Ø(x)) est en outre la plus faible.

2. Procédé selon la revendication 1, **caractérisé en ce que**
la situation-type d'accident correspondant le mieux à la situation actuelle d'accident est déterminée à partir du nombre prédéfini de situations-types d'accidents,
l'écart relatif des paramètres actuellement détectés par les capteurs pour la détection de la nature et de la gravité d'un accident imminent ou en cours étant déterminé par rapport à une valeur de référence attribuée à chacune des situations-types d'accidents, et la situation-type d'accident pour laquelle l'écart total sur tous les paramètres est le plus faible étant déterminée.

3. Procédé selon la revendication 1, **caractérisé en ce que**
la situation-type d'occupants correspondant le mieux à la situation actuelle des occupants est déterminée à partir du nombre prédéfini de situations-types d'occupants,
l'écart relatif des paramètres actuellement détectés par au moins un moyen de détection des occupants par rapport à la valeur de référence attribuée respectivement à chacune des situations-types d'occupants étant déterminé, et la situation-type d'occupants présentant l'écart total le plus faible sur l'ensemble des paramètres étant déterminée.

4. Procédé selon la revendication 2 ou 3, **caractérisé en ce que** chaque paramètre se voit attribuer un facteur de pondération, dans lequel au moins un facteur de pondération différent des autres est prévu pour au moins un paramètre, et la somme des écarts relatifs ainsi pondérés est déterminée.

5. Procédé selon la revendication 2 ou 3, **caractérisé en ce que**, pour au moins un dispositif de protection des occupants individuel ou pour un sous-ensemble du nombre de configurations de déclenchement du système de protection des occupants, seule une sous-partie du nombre de paramètres, au moins les paramètres les plus pertinents pour la décision de déclenchement, est prise en compte, et
pour la situation actuelle des occupants, la situation-type d'occupants correspondant le mieuxet/ou,
pour la situation actuelle d'accident, la situation-type d'accident correspondant le mieux est déterminée uniquement sur la base de cette sous-partie du nombre de paramètres, au moins les paramètres les plus pertinents pour la décision de déclenchement.

6. Procédé selon la revendication 5, **caractérisé en ce que,** pour la pluralité de parties du corps, un facteur de pondération est attribué à chacune des valeurs de charge normalisées ou aux grandeurs dérivées de celles-ci, dans lequel un facteur de pondération différent des autres est prévu pour au moins une valeur de charge et qu'une moyenne pondérée est ainsi déterminée.

7. Procédé selon la revendication 1, **caractérisé en ce que,** pour la pluralité de parties du corps, les valeurs de charge normalisées sont classées en un nombre prédéfini de niveaux de danger, et que, comme valeur maximale, la valeur la plus élevée des niveaux de danger des parties du corps est utilisée, laquelle a été déterminée pour la configuration de déclenchement ainsi que pour la situation-type d'occupants et la situation-type d'accident.

8. Procédé selon l'une quelconque des revendications précédentes, **caractérisé en ce que**
pour la situation actuelle d'accident, au lieu d'une seule situation-type d'accident correspondant le mieux, une pluralité de situations-types d'accidents les plus proches est déterminée, et/ou
pour la situation actuelle des occupants, au lieu d'une seule situation-type d'occupants correspondant le mieux, une pluralité de situations-types d'occupants les plus proches est déterminée
et que, pour la situation actuelle d'accident et/ou la situation actuelle des occupants, pour au moins certains dispositifs de protection des occupants et au moins pour le sous-ensemble des paramètres les plus pertinents pour leur déclenchement, ces paramètres sont déterminés à partir de l'interpolation des valeurs de la pluralité de situations-types d'accidents les plus proches et/ou de la pluralité de situations-types d'occupants les plus proches.

9. Unité de commande (ACU) pour un système de protection des occupants d'un véhicule automobile, comprenant : au moins une interface d'entrée pour le raccordement de capteurs (SC1...SCm) pour la détection de la nature et de la gravité d'un accident imminent ou en cours, ainsi qu'au moins un moyen de détection des occupants (SP1...SPn)
- ainsi qu'au moins une interface de sortie pour le raccordement de dispositifs de protection des occupants (R1...Ro), **caractérisé en ce**
**qu'**un algorithme pour exécuter le procédé selon l'une quelconque des revendications précédentes est stocké avec les valeurs de charge normalisées correspondantes pour les parties du corps dans les situations-types d'occupants respectives prédéfinies et les situations-types d'accidents pour les configurations de déclenchement prévues à cet effet.
